# EUROPEAN PATENT APPLICATION

(11) **EP 2 116 519 A1**
(43) Date of publication of application: **11.11.2009**
(21) Application number: 08721000.1
(22) Date of filing: 28.02.2008
(51) Int. Cl.: C04B 35/443

(54) **SPINEL SINTERED BODY, METHOD FOR PRODUCING THE SAME, TRANSPARENT SUBSTRATE, AND LIQUID CRYSTAL PROJECTOR**

(30) Priority: 02.03.2007 JP 2007053013
(71) Applicant: Sumitomo Electric Industries, Ltd., Osaka-shi, Osaka 541-0041 (JP)
(72) Inventor: YOSHIMURA, Masashi, Hyogo 664-0016 (JP); YOSHIKANE, Takenori, Osaka-shi Osaka 5540024 (JP); NAKAYAMA, Shigeru, Osaka-shi Osaka 5540024 (JP); FUJII, Akihito, Osaka-shi Osaka 5540024 (JP)
(74) Representative: Setna, Rohan P.
(86) International application number: PCT/JP2008/053551
(87) International publication number: WO 2008/108276

(57) **Abstract**

The present invention provides a spinel sintered body having a composition of MgO•nAl₂O₃ (1.05 ≤n ≤1.30) and containing 20 ppm or less of Si element, and a production method thereof, the method comprising a step of forming a compacted body from a spinel powder containing 50 ppm or less of Si element and having a purity of not less than 99.5 mass%, a first sintering step of forming a sintered body having a density of not less than 95% by sintering the compacted body at 1500°C to 1700°C in a vacuum, and a second sintering step of subjecting the sintered body to pressurized sintering at 1600°C to 1800°C.

## Description

### [Technical Field]

The present invention relates to a spinel sintered body having excellent transparency and stability of transparency, and a method for producing this spinel sintered body. In addition, the present invention also relates to a transparent substrate comprising this spinel sintered body, and a liquid crystal projector provided with this transparent substrate.

### [Background Art]

Spinel sintered bodies are cubic crystals having a crystal form which does not possess polarization properties, have relatively high thermal conductivity among oxide ceramics, and exhibit transparency in the mid-infrared region to visible region, and are therefore of interest as polarizing plates in a variety of electronic devices, such as liquid crystal projectors or rear-projection televisions, as light-transmitting windows such as dust-proofing windows, or as transparent substrate materials for lenses and the like.

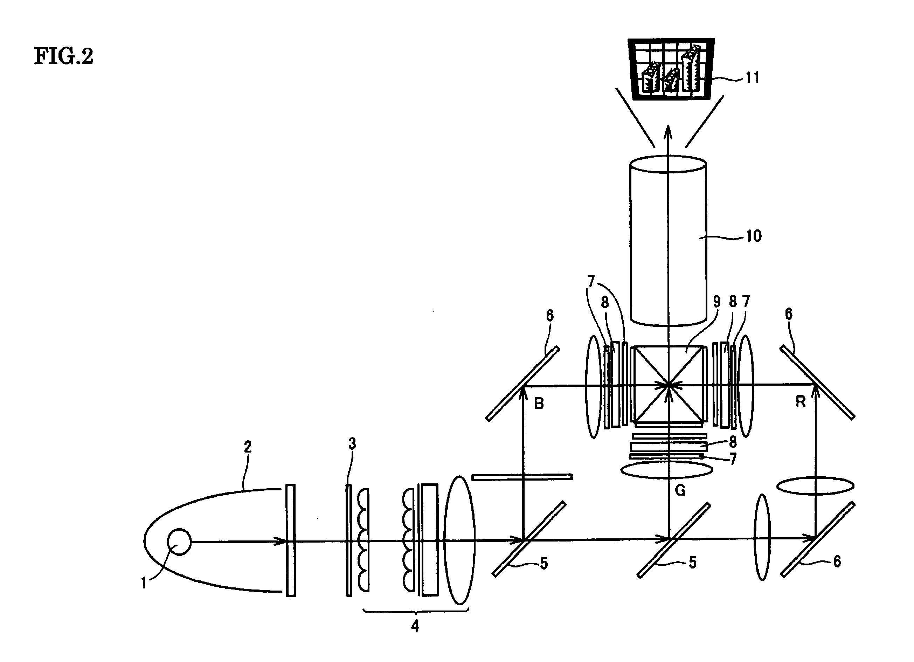

Figure 2 shows a typical structure of a liquid crystal projector. As shown in Fig. 2, light projected from a light source 1 such as a metal halide lamp or a xenon lamp is reflected by a reflector 2, passes through an ultraviolet cut filter 3 and the like, and is then drawn to an integrator polarization conversion optical system 4. Next, the light is broken down into red (R), green (G) and blue (B) primary colors by a dichroic mirror 5, which transmits or reflects the light depending on the wavelength thereof, and the resolved light is separately passed through a polarizing plate 7 and a dust-proofing window 8 by using a total reflection mirror 6, combined by a cross-dichroic prism 9, expanded by a projection lens system 10, and projected as a pictorial image 11 on a forward screen. Stable, high light transmittance is required in thick materials having this type of structure when these materials are used in polarizing plates for liquid crystal projectors and the like, light-transmitting windows such as dust-proofing windows, or transparent substrates for light-transmitting lenses.

For example, a polycrystalline transparent spinel sintered body has been reported in which the Al₂O₃:MgO composition ratio is in the range 0.53:0.47 to 0.58:0.42, and the in-line transmittance of light having a wavelength of 600 nm is 75% or more at a thickness of 1 mm (refer to Japanese Unexamined Patent Application Publication No. S59-121158 (patent document 1)). However, this spinel sintered body has a maximum in-line transmittance of 600-nm light of approximately 84% or less, and has a low in-line transmittance of light having a wavelength of 450 nm, and can therefore be used in the mid-infrared region but is difficult to use in the visible region, where high transmittance characteristics are required.

In addition, a method for producing a transparent spinel sintered body has been reported in which a spinel powder having a purity of 99.5% or higher and a specific surface area of 10 m²/g is hot pressed in a vacuum at 1200°C to 1700°C and then subjected to HIP (Hot Isostatic Pressing) (refer to Japanese Unexamined Patent Application Publication No. H02-018354 (patent document 2)). Because a spinel sintered body produced using this method exhibits a maximum in-line transmittance of 85% in the infrared region having a wavelength of 3 µm to 5 µm, but has an average in-line transmittance of 75% at wavelengths of 0.4 µm to 3 µm, it is also difficult to use this spinel sintered body in the visible region, where high light transmittance characteristics are required.

A method for producing a transparent polycrystalline body has also been reported in which a spinel powder having a purity of 99.9% or higher is preformed and hot pressed, with the obtained spinel sintered body then being subjected to HIP (refer to Japanese Unexamined Patent Application Publication No. 2005-070734 (patent document 3)). This transparent polycrystalline body has an average in-line transmittance of 84% for light having wavelengths in the range 400 µm to 800 µm, but the light transmittance of this spinel sintered body is variable and there are problems with the stability of the sintered body, such as the in-line transmittance being 80% or less depending on the sample measured. In addition, if the thickness of the sintered body is 10 mm or more, a heterogeneous phase occurs in the central part of the sintered body, which results in the problem of the in-line transmittance decreasing.
[Patent document 1] Japanese Patent Application Publication No. S59-121158
[Patent document 2] Japanese Patent Application Publication No. H02-018354
[Patent document 3] Japanese Patent Application Publication No. 2005-070734

### [Disclosure of the Invention]

### [Problems to be Solved by the Invention]

The present invention takes into account the circumstances described above, and an object thereof is to provide a spinel sintered body which has an in-line transmittance of 80% or higher for visible light having wavelengths of 350 nm to 450 nm, which is sufficient for use, and enables a stable, high transmittance. The present invention also provides a spinel sintered body which enables a stable, high transmittance in the visible region even if the spinel sintered body is a thick material, and a method for producing such a spinel sintered body. The present invention also provides a transparent substrate for a liquid crystal projector which comprises this spinel sintered body, and a liquid crystal projector provided with this transparent substrate.

### [Means for Solving the Problems]

The spinel sintered body of the present invention has a composition of MgO•nAl₂O₃ (1.05 ≤n ≤1.30) and contains 20 ppm or less of Si element. A preferred mode of this sintered body is one in which the in-line transmittance of light having wavelengths of 350 nm to 450 nm is 80% or higher at a thickness of 1 mm.

The present invention also provides a method for producing a spinel sintered body having a composition of MgO•nAl₂O₃ (1.05 ≤n ≤1.30) and containing 20 ppm or less of Si element, comprising a step of forming a compacted body from a spinel powder containing 50 ppm or less of Si element and having a purity of not less than 99.5 mass%, a first sintering step of forming a sintered body having a density of not less than 95% by sintering the compacted body at 1500°C to 1700°C in a vacuum, and a second sintering step of subjecting the sintered body to pressurized sintering at 1600°C to 1800°C.

It is possible for the sintered body formed by the first sintering step to contain 20 ppm or less of Si element. In addition, a mode is preferred in which the first sintering step is carried out at a pressure of 50 Pa or less, and the relationships D = a × t^{1/2} and 1 ≤a ≤3 are satisfied, where D is the minimum thickness (mm) from the central part of the sintered body to the outer edge thereof, and "t" is the heating time required to reach the maximum temperature from 1000°C.

The transparent substrate of the present invention comprises a spinel sintered body and can be used as a transparent substrate for a liquid crystal projector. In particular, a mode is preferred in which the surface of the transparent substrate has a coating layer. The liquid crystal projector of the present invention is characterized by being provided with this type of transparent substrate and a light source which emits visible light.

### [Advantages]

It is possible to provide a sintered body having a spinel structure which has stable transmittance characteristics that are sufficient for use even in visible light. In addition, the spinel sintered body has high light transmission characteristics and can therefore control temperature rising of liquid crystal due to heat dissipation and low heat absorption caused by the light from the light source. Because of these characteristics, this spinel sintered body can be used as a transparent substrate for a liquid crystal projector.

### [Brief Description of the Drawings]

Figure 1 shows the relationship between the in-line transmittance of light having a wavelength of 350 nm, and the Si element content.
Figure 2 shows a typical structure of a liquid crystal projector.

### [Description of the Numerals]

1: Light source, 2: Reflector, 3: Ultraviolet cut filter, 4: Integrator polarization conversion optical system, 5: Dichroic mirror, 6: Total reflection mirror, 7: Polarizing plate, 8: Dust-proofing window, 9: Cross-dichroic prism, 10: Projection lens system, 11: Pictorial image

### [Best Mode for Carrying Out the Invention]

### (Spinel sintered body)

The spinel sintered body of the present invention has a composition of MgO•nAl₂O₃ (1.05 ≤n ≤1.30) and contains 20 ppm or less of Si element. This spinel sintered body preferably has an in-line transmittance of 80% or higher, more preferably 82% or higher, and further preferably 84% or higher, for visible light having wavelengths of 350 nm to 450 nm at a thickness of 1 mm, and therefore has a sufficiently high in-line transmittance. In addition, this spinel sintered body achieves a stable, high light transmittance with little variation therein. Furthermore, a stable, high visible light transmittance is achieved even if the spinel sintered body is a thick material. Therefore, this spinel sintered body can be used as a polarizing plate for light-emitting devices such as light emitting diodes, laser devices, liquid crystal projectors, rear-projection televisions or digital micromirror devices; as a light-transmitting window such as a dust-proofing window; or as a transparent substrate material such as a light-transmitting lens. As a result, a liquid crystal projector provided with the transparent substrate of the present invention has high in-line transmittance of visible light from a light source and has little unevenness of brightness.

In-line transmittance is the ratio of the intensity of the transmitted light to the intensity of the incident light in a straight line parallel to optical axis of the incident light, and can be measured using a CCD. Therefore, for light of a certain wavelength, if the in-line transmittance is higher, stronger light transmission is achieved and the amount of light energy absorbed by a light transmitting lens or window is reduced, meaning that it is possible to control temperature rising of the lens or window.

The spinel sintered body has a composition of MgO•nAl₂O₃ (1.05 ≤n ≤1.30) and contains an oxide comprising MgO (magnesia) and Al₂O₃ (alumina). The spinel sintered body has a cubic crystal form, meaning that light scattering does not easily occur at the crystal grain boundary and, if sintered to a high density, can achieve good light transmission characteristics. Because the condition 1.05 ≤n ≤1.30 is satisfied, the amount of MgO present in solid solution form is small, and there is little variation in, or distortion of, the microscopic crystalline lattice, making it possible to improve the transmission characteristics. From this perspective, it is preferable that the condition 1.07 ≤n ≤1.125 be satisfied.

In general, contamination by metal impurities is a cause of reduced light transmission characteristics in spinel sintered bodies, and Si, Ti, Na, K, Ca, Fe, C and the like are examples of metal impurities. These metal impurities are contained in sintered bodies due to being present in material powder. Keeping the content of Si element, which is one of the metal impurities, at 20 ppm or less makes it possible to obtain stable, high light transmission characteristics. From this perspective, the Si element content is preferably 10 ppm or less, and more preferably 5 ppm or less. By controlling the Si element content in this way, it is possible to achieve uniform light transmission characteristics even if the spinel sintered body has a thickness of 10 mm or more. Si element reacts with the spinel powder during sintering and generates a liquid phase. This liquid phase has the effect of accelerating the sinterability of the spinel powder, but the liquid phase forms a heterogeneous phase if allowed to remain at the grain boundary, thereby causing the light transmittance to decrease.

If metal impurities other than Si element, such as Na, K, Ca or Fe, are present as impurities, these have an adverse effect on the light transmission characteristics of the spinel sintered body, the uniformity thereof, and manufacturing stability. Therefore, the purity of the MgO•nAl₂O₃ in the spinel powder is 99.5 mass% or higher, preferably 99.9 mass% or higher, and more preferably 99.99 mass% or higher.

From the perspective of increasing light transmittance and surface stability, it is preferable for the surface of a transparent substrate for a liquid crystal projector comprising a spinel sintered body to have a coating layer. The coating layer is effective even as a single layer, but it is more preferable to apply a multilayer coating from the perspective of achieving stable transmission characteristics in the wavelength region of 400 nm to 700 nm, which is a commonly used region. If a multilayer coating is provided, the coating material is preferably a metal oxide such as SiO₂, TiO₂, Al₂O₃, Y₂O₃, Ta₂O₅ or ZrO₂, or a metal fluoride such as MgF₂, YF₃, LaF₃, CeF₃ or BaF₂. The total thickness of the coating layer is preferably 5 µm or less. The average transmittance of a spinel sintered body having, on one side thereof, a coating layer obtained in this way is preferably 90% or higher, more preferably 91 % or higher, and further preferably 92% or higher, in the wavelength region of 400 nm to 700 nm.

### (Method for Producing a Spinel Sintered Body)

The method for producing a spinel sintered body according to the present invention comprises a step of forming a compacted body from a spinel powder containing 50 ppm or less of Si element and having a purity of not less than 99.5 mass%, a first sintering step of forming a sintered body having a density of not less than 95% by sintering the compacted body at 1500°C to 1700°C in a vacuum, and a second sintering step of subjecting the sintered body to pressurized sintering at 1600°C to 1800°C. By using this method, it is possible to produce a spinel sintered body having a composition of MgO•nAl₂O₃ (1.05 ≤n ≤1.30) and containing 20 ppm or less of Si element, and also possible to provide a lens or light transmitting window having a stable, high light transmittance and having little variation in light transmittance.

Firstly, a spinel powder is formed by press forming or CIP (Cold Isostatic Pressing). Then, in a first sintering step, a sintered body having a density of not less than 95% is formed by sintering the compacted body at 1500°C to 1700°C in a vacuum. By sintering in a vacuum environment, it is possible to eliminate the liquid phase generated from Si element, which is an impurity, through evaporation in the vacuum. From this perspective, the degree of vacuum is preferably 50 Pa or less, and more preferably 20 Pa or less.

The conditions for the first sintering step vary according to the quantity of Si element and the thickness of the sintered body, but a mode is preferred in which the following relationships are satisfied: D = a × t^{1/2} and 1 ≤a ≤3, where D is the minimum thickness (mm) from the central part of the sintered body to the outer edge thereof, and "t" is the heating time required to reach the maximum temperature from 1000°C.

As is clear from the results of Example 2, described below, by increasing the temperature within this range, it is possible to reduce the Si element content to 20 ppm or less following completion of the first sintering step if the Si element content in the spinel powder is 50 ppm or less, thereby obtaining a spinel sintered body having high light transmittance. In order to greatly reduce the Si element content in the sintered body, it is preferable for the Si element content in the spinel powder to be 30 ppm or less. If the Si element content in the spinel powder is 50 ppm or higher, it is possible to reduce the Si content in the sintered body by further increasing the heating time in the vacuum atmosphere in the first sintering step.

In addition, the temperature in the first sintering step is preferably kept at 1500°C or higher in order to obtain a highly densified sintered body having a density of 95% or higher. From the perspective of increasing the light transmittance of the sintered body, the density of the sintered body is preferably kept at 95% or higher. In the present invention, the term "density" refers to relative density, measured using the Archimedean method. However, the sintering temperature is preferably kept at 1700°C or lower, and more preferably 1650°C or lower, from the perspectives of suppressing vaporization of the MgO in the vacuum, preventing the Al₂O₃ from precipitating as a second phase during cooling, and maintaining high light transmission characteristics.

Following completion of the first sintering step, the sintered body is subjected to pressurized sintering at 1600°C to 1800°C by HIP or the like in a second sintering step. Because carrying out HIP at a temperature of 1600°C to 1800°C and a pressure of 100 MPa promotes the elimination of voids through plastic deformation and a diffusion mechanism, it is possible to further densify the sintered body and greatly improve the light transmittance. The gas used in the HIP is preferably an inert gas such as argon gas or nitrogen gas, oxygen gas, or a mixture thereof, and by blending oxygen gas, it is possible to prevent a reduction of transmission characteristics due to deoxydation.

The coating layer is preferably formed on the surface of the transparent substrate by physical vapor deposition. It is possible to use a sputtering method, an ion plating method, a vacuum deposition method, or the like, and ion assist or plasma assist is preferred from the perspective of improved film performance.

### (Examples 1-7)

In these examples, the Si element content in the raw material spinel powders was varied to be 50 ppm or less, and the light transmittance of the spinel sintered bodies following forming was investigated. Firstly, spinel powders having purities of 99.5 mass% and containing impurities at the levels shown in table 1 were formed and then processed by CIP into bodies having a diameter of 95 mm and a length of 95 mm. Next, a first sintering step was carried out at 1600°C in a vacuum at 20 Pa while heated at 1°C/min. The densities of the obtained sintered bodies were 95% to 97%.

The minimum thickness D from the central part of the sintered body to the outer edge thereof was 39 mm, and because the heating conditions in the first sintering step were 1°C/min, the time "t" required to reach the maximum temperature of 1600°C from 1000°C was 600 minutes. Therefore, because D = a × t^{1/2}, "a" was calculated to be 1.6, which satisfies the relationship 1 ≤a ≤3.

Next, a second sintering step was carried out HIP at a temperature of 1700°C and a pressure of 100 MPa with using argon gas. The obtained sintered body had a diameter of 82 mm and a length of 78 mm, and had a composition of MgO•1.07Al₂O₃, as measured by Inductively Coupled Plasma Atomic Emission Spectrometry, which satisfies the relationship 1.05 ≤n ≤1.30. The central part of this sintered body was cut, polished, and measured for in-line transmittance of light having wavelengths of 350 nm and 450 nm at a thickness of 1 mm using a spectrophotometer (U-4100, manufactured by Hitachi High-Technologies Corporation). This central part was crushed and measured for Si element content using Inductively Coupled Plasma Atomic Emission Spectrometry. The measurement results are shown in table 1.

As is clear from the results in table 1, by using a spinel powder containing 50 ppm or less of Si element in the method of the present invention, it is possible to produce a spinel sintered body having a composition of MgO•nAl₂O₃ (1.05 ≤n ≤1.30) and containing 20 ppm or less of Si element. It was also understood that the spinel sintered body had an in-line transmittance of 80% or higher and little variation in light transmittance.

**[Table 1]**

| | Spinel powder | | | | | Spinel sintered body | | |
|---|---|---|---|---|---|---|---|---|
| | Impurity element content (ppm) | | | | | Si element content (ppm) | In-line transmittance (%) | |
| | Si | Fe | Na | K | Ca | | Wavelength 350 nm | Wavelength 450 nm |
| Example 1 | 3 | 5 | 20 | 10 | 10 | <1 | 85.1 | 85.8 |
| Example 2 | 5 | | | | | 3 | 85.2 | 85.7 |
| Example 3 | 10 | | | | | 5 | 84.1 | 85.5 |
| Example 4 | 20 | | | | | 9 | 82.4 | 84.4 |
| Example 5 | 25 | | | | | 11 | 82.0 | 83.3 |
| Example 6 | 30 | | | | | 15 | 81.8 | 83.2 |
| Example 7 | 45 | | | | | 18 | 80.5 | 83.2 |

### (Examples 8-10, Reference Example 1)

In these examples, the heating time "t" in the first sintering step was varied (D was fixed), and the relationship between the value of a, calculated from the relationship D = a × t^{1/2}, and the Si element content and the light transmission characteristics of the sintered body was investigated.

Using the spinel powder used in Example 5, the value of a was altered as shown in table 2 by altering the heating time (t) without altering D in the first sintering step, and spinel sintered bodies were produced in the same way as in Example 5 in terms of other conditions. The measurements were carried out in the same way as in Example 5, with the Si element content of the sintered body formed in the first sintering step and the in-line transmittance of the sintered body following completion of the second sintering step being measured. The measurement results are shown in table 2.

**[Table 2]**

| | a | Si element content (ppm) | In-line transmittance (%) | |
|---|---|---|---|---|
| | | | Wavelength 350 nm | Wavelength 450 nm |
| Reference Example 1 | 4 | 22 | 71.0 | 74.2 |
| Example 8 | 3 | 14 | 81.3 | 84.0 |
| Example 9 | 2 | 9 | 85.2 | 85.6 |
| Example 10 | 1 | 4 | 85.3 | 85.5 |

As is clear from the results in table 2, in cases where the relationship 1 ≤a ≤3 was satisfied, if the spinel powder contained 50 ppm or less of Si element, it was possible to reduce the Si element content to 20 ppm or less following completion of the first sintering step, and the in-line transmittance of all the spinel sintered bodies was 80% or higher.

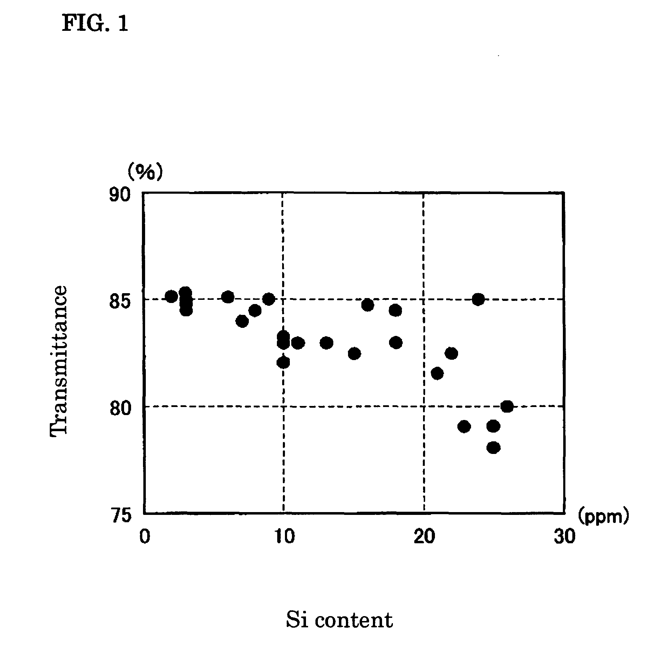

The spinel bodies of Examples 2 and 4 and Reference Example 1 were cut at intervals of 5 mm in the thickness direction, each sample was finished to a thickness of 1 mm, and the relationship between the in-line transmittance of light having a wavelength of 350 nm and the Si element content was investigated. These results are shown in Fig. 1. As is clear from the results in Fig. 1, it was understood that samples having high Si element contents had large variations in in-line transmittance, whereas samples containing 20 ppm or less of Si element exhibited stable, high transmission characteristics.

The modes and examples disclosed here are embodiments in every sense and should not be considered as being limiting examples. The scope of the present invention is disclosed in the claims, not in the descriptions given above, and it is intended to cover all modifications within the scope of the invention and the equivalent meanings thereof.

### [Industrial Applicability]

The spinel sintered body of the present invention has stable, high light transmission characteristics, and is therefore suitable as a material for light-transmitting windows or light-transmitting lenses used in light emitting diodes, laser devices, liquid crystal projectors, rear-projection televisions, digital micromirror devices, and other light emitting device applications.

## Claims

1. A spinel sintered body having a composition of MgO•nAl₂O₃ (1.05 ≤n ≤1.30) and containing 20 ppm or less of Si element.

2. The spinel sintered body according to claim 1, wherein the sintered body has an in-line transmittance of 80% or higher at a thickness of 1 mm for light having a wavelength of 350 nm to 450 nm.

3. A transparent substrate for a liquid crystal projector comprising the spinel sintered body according to claim 1.

4. The transparent substrate according to claim 3, wherein a surface of the substrate has a coating layer.

5. A liquid crystal projector comprising the transparent substrate according to claim 3, and a light source which emits visible light.

6. A method for producing a spinel sintered body having a composition of MgO•nAl₂O₃ (1.05 ≤n ≤1.30) and containing 20 ppm or less of Si element, the method for producing a spinel sintered body comprising:
a step of forming a compacted body from a spinel powder containing 50 ppm or less of Si element and having a purity of not less than 99.5 mass%;
a first sintering step of forming a sintered body having a density of not less than 95% by sintering the compacted body at 1500°C to 1700°C in a vacuum; and
a second sintering step of subjecting the sintered body to pressurized sintering at 1600°C to 1800°C.

7. The method for producing a spinel sintered body according to claim 6, wherein the sintered body formed in the first sintering step contains 20 ppm or less of Si element.

8. The method for producing a spinel sintered body according to claim 6, wherein:
the first sintering step is carried out at a pressure of 50 Pa or less; and
the relationships D = a × t^{1/2} and 1 ≤a ≤3 are satisfied, where D is the minimum thickness (mm) from the central part of the sintered body to the outer edge thereof, and "t" is the heating time required to reach the maximum temperature from 1000°C.
